# EUROPÄISCHE PATENTSCHRIFT

(11) **EP 1 679 503 B1**
(45) Veröffentlichungstag und Bekanntmachung des Hinweises auf die Patenterteilung: **30.09.2009**
(21) Anmeldenummer: 05090291.5
(22) Anmeldetag: 19.10.2005
(51) Int. Cl.: G01N 21/91

(54) **Verfahren zur kontinuierlichen Überwachung des Auftretens von Schädigungen an einem Bauteil**
Method for continuously monitoring the occurrence of damage on a component
Procédé destiné à la surveillance continue de détériorations survenant sur un composant

(30) Priorität: 10.01.2005 DE 102005001655 U
(43) Veröffentlichungstag der Anmeldung: 12.07.2006
(73) Patentinhaber: Peil, Udo, Prof. Dr.-Ing., 38302 Wolfenbüttel (DE); Ummenhofer, Prof. Dr.-Ing., Thomas, 38104 Braunschweig (DE); Siems, Dr.-Ing., Michael, 38106 Braunschweig (DE)
(72) Erfinder: Prof.Dr.Ing. Thomas Ummenhofer, 38104 Braunschweig (DE)
(74) Vertreter: Meissner, Peter E.

(56) Entgegenhaltungen:
- DE-A1- 19 645 377
- US-A- 3 469 439
- US-A- 3 803 485
- US-A1- 2002 000 128

## Beschreibung

Die Erfindung betrifft ein Verfahren zur kontinuierlichen Überwachung des Auftretens von Rissen an Bauteilen, gemäß dem Oberbegriff des Patentanspruchs 1.

Betrachtet werden in diesem Zusammenhang insbesondere ein- oder mehrteilige Bauteile, die unter ruhender, dynamischer und/oder wechselnder Beanspruchung stehen.

Insbesondere dynamisch bzw. wechselnd beanspruchte Metallbauteile, wie z. B. Automobilteile, Fahrradbauteile, Flugzeugflügel, Krananlagen, Windenergieanlagen, Brücken etc. sind einer Werkstoffermüdung ausgesetzt, die in Abhängigkeit des ertragenen Lastkollektivs steht. Ist die Ermüdungsgrenze erreicht, treten Schäden infolge von wachsenden Rissen auf, die zum Bauteilversagen führen können.

Wichtig ist, dass diese Konstruktionen sicher betrieben werden, d. h. eine ausreichende Ermüdungssicherheit bzw. Tragsicherheit vorhanden ist.

Es existieren eine Reihe von Ansätzen zur rechnerischen Bestimmung des Ermüdungs- bzw. Schädigungsgrads. Diese erweisen sich teilweise jedoch als zu konservativ bzw. unzutreffend. Deshalb sind regelmäßige Inspektionen und Überwachungen der gefährdeten Bauteile (Monitoring) erforderlich.

Im Bauwesen besteht die Situation, dass ein Großteil unserer Verkehrsinfrastruktur aus Stahl ihre rechnerische Ermüdungsgrenze bereits erreicht hat bzw. bald erreichen wird.

Im Rahmen von Inspektionen Schädigungen in Form von Rissen oder Plastizierungen zu erkennen, ist an unzugänglichen bzw. nicht einsehbaren Stellen, wie Hohlräumen, Verschneidungspunkten etc., sehr schwierig.

Außer der visuellen Inspektionsmöglichkeit gibt es eine Reihe von Verfahren zum Sichtbarmachen von Rissen, die jedoch immer von Fachleuten und teilweise sogar nur zu bestimmten Zeitpunkten anzuwenden sind. Hierzu zählen u. a. Farbeindringverfahren, Magnetpulververfahren, Wirbelstromprüfverfahren, Röntgenverfahren, Durchstrahlungsverfahren, Ultraschall(US)-Verfahren und thermografische Verfahren.

Aus der US 5,534,289 bzw. US 2002/0000128 A1 ist ein Verfahren bekannt, bei dem zur kontinuierlichen Überwachung des Auftretens von Rissen an einem unter Beanspruchung stehenden Bauteil, die rissgefährdeten Bereiche von Oberflächenelementen mit Beschichtungen versehen sind, die von Farbe enthaltenden Mikrokapseln durchsetzt sind. Hierbei werden eine oder mehrere Beschichtungen aufgetragen, wobei die Mikrokapseln in jeder Beschichtung eine andere Farbe aufweisen. Bei einem in diesem Bereich auftretenden Riss werden die in der Beschichtung eingelagerten Mikrokapseln beschädigt, die darin enthaltene Farbe wird freigesetzt und auf der Beschichtungsoberfläche sichtbar. Die Detektion wird dabei visuell oder automatisiert über ein entsprechend an den vermuteten Rissstellen angeordnetes optisches Erfassungssystem, beispielsweise über Lichtleitkabel, durchgeführt.

Dieses bekannte Verfahren zur optischen Rissüberwachung von Bauteilen ist mit mehreren Nachteilen behaftet. Einerseits kann die rissgefährdete Stelle am Bauteil oftmals nicht exakt vorherbestimmt werden, so dass es bei einer automatisierten Überwachung schwierig ist, das Erfassungssystem örtlich so zu positionieren, dass ein entstehender Riss erfasst werden kann oder aber es müssen in zeit- und kostenaufwändiger Weise mehrere Erfassungssysteme installiert werden, die das örtliche Umfeld des vermeintlichen Rissortes erfassen. Außerhalb dieses Erfassungsbereiches auftretende Risse bleiben demzufolge unentdeckt.

Schädliche Plastizierungen im Bauteil allein, ohne eine Rissentstehung können mit diesem Verfahren ebenfalls nicht detektiert werden.

Andererseits ist es nachteilig, dass bei ungünstigen Beleuchtungsverhältnissen, insbesondere bei schwer zugänglichen oder verdeckten Stellen des Bauteils oder im Inneren von einem als Hohlkörper ausgebildeten Bauteil, die visuelle Rissdetektion äußerst schwierig und aufwändig, wenn nicht sogar unmöglich ist.

Wenn überhaupt realisierbar, kommt für solche Fälle nur eine automatisierte optische Erfassung des entstandenen Risses in Frage. Hierzu muss der Hohlkörper allerdings innen permanent beleuchtet werden, was zusätzlichen installations- und Kostenaufwand bedeutet.

Aus der US 3,803,485 ist ein Verfahren zur Risserkennung bekannt, bei dem auf ein Bauteil Mikrokapseln, die mit einer elektrisch leitenden Substanz gefüllt sind, aufgebracht werden. Im Fall eines Risses, kommt es zu Beschädigungen dieser Mikrokapseln, so dass die Substanz freigesetzt und über ein entsprechendes Messgerät erfasst werden kann.

Aufgabe der Erfindung ist es, ein Verfahren zur kontinulerlichen Überwachung des Auftretens von Schädigungen in Form von Rissen oder Plastizierungen an einem unter ruhender, dynamischer und/oder wechselnder Belastung stehenden ein- oder mehrteiligen Bauteil anzugeben, mit dem eine sichere Detektion der Schädigung in einfacher und kostengünstiger Weise auch bei nicht unmittelbar am vermeintlichen Schadensort auftretenden Rissen oder Plastizierungen möglich ist.

Eine weitere Aufgabe besteht darin, dieses Verfahren auch für schwer zugängliche Stellen an Bauteilen oder für die Rissdetektion im inneren von Hohlkörpern anwendbar zu gestalten.

Erfindungsgemäß wird die Hauptaufgabe durch das Merkmal des kennzeichnenden Teils gelöst.

Vorteilhaft ist dieses Verfahren in Räumen mit nur geringer Luftzirkulation anzuwenden, um eine sichere Detektion des Mediums zu gewährleisten.

Im Unterschied zum bekannten Stand der Technik, ist es mit dem erfindungsgemäßen Verfahren auch möglich, Risse bzw. Plastizierungen im Bauteil zu detektieren, die nicht in unmittelbarer Nähe des Sensors auftreten.

Die standardmäßig lieferbaren, kleinbauenden und preisgünstig erhältlichen Gassensoren detektieren nunmehr auf einfache und vor allem sicheren Weise, unabhängig von der örtlichen Lage des Risses oder der Plastizierung das austretende gasförmige Medium, also den Duffstoff und ordnen dies einer Schädigung im Bauteil zu.

Hierbei können die den Wirkstoff enthaltenen Mikrokapseln in geeigneter Form entweder direkt auf die schadensgefährdeten Bereiche der Bauteiloberfläche aufgebracht werden oder in einer vorteilhaften Ausgestaltung des Verfahrens, einem Beschichtungswerkstoff zugesetzt werden.

Je nach Beschaffenheit der Oberfläche kann eine einlagige oder mehrlagige Beschichtung erforderlich sein, wobei mindestens eine Lage Mikrokapseln enthält.

Diese Beschichtungen sind hinsichtlich ihrer Dehnbarkeit vorteilhaft so ausgebildet, dass sie, wenn ein Riss oder eine Plastizierung im beschichteten Werkstoff auftritt, die in der Beschichtung enthaltenen Mikrokapseln ebenfalls beschädigt werden wodurch der Wirkstoff austritt, der sensorisch detektier- und identifizierbar ist und somit die Schadensentstehung anzeigt.

Es ist auch denkbar, dass die Bauteilelemente mit unterschiedlichen Beschichtungen versehen werden, wobei jede Beschichtung mit einen anderen Wirkstoff enthaltenden Mikrokapseln durchsetzt ist und zur Detektion der Schädigung ein den jeweiligen Wirkstoff identifizierender Sensor an den einzelnen Bauteilelementen angeordnet wird.

Mit der Identifizierungsmöglichkeit verschiedener freigesetzter Wirkstoffe ist es in vorteilhafter Weise möglich, dass eine entstandene Schädigung einem entsprechenden Bauteilelement zugeordnet werden kann. Dies ist insbesondere bei komplexen Bauteilstrukturen sinnvoll, um das entsprechende beschädigte Bauteil lokalisieren zu können.

Besonders vorteilhaft kann dieses Verfahren auch an schwer zugänglichen Stellen eines Bauteils oder im Inneren von einem als Hohlkörper ausgebildeten Bauteil angewendet werden.

Der Anwendungsbereich für Hohlkörper erstreckt sich auf alle Bereiche in der industriellen Verwendung, bei denen die kontinuierliche und automatisierte Überwachung des Auftretens von Schädigungen in Form von Rissen oder Plastizierungen im Inneren des Hohlkörpers wünschenswert ist oder zwingend gefordert wird, wie z. B. bei tragenden Elementen von Fahrzeugen (Achsträger, Querlenker etc.), Flugzeugen, Maschinenbauteilen, Brückenbauwerken, Kranalagen oder Windenergieanlagen.

Über eine automatische Überwachung, z. B. der Bauteile eines Flugzeugflügels, können verschiedene Bauteilelemente mit unterschiedlich dotierten Beschichtungen versehen werden. Ein stationärer Miniatursensor kann so nicht nur die Schädigung, sondern über die Zusammensetzung der Substanz auch den Ort der Schädigung anzeigen. Je nach Erfordernissen kann jedoch auch ein mobiler, instationär angeordneter Sensor eingesetzt werden.

Ein weiterer Anwendungsbereich dieses Verfahrens erschließt sich vorteilhaft auch für die Schadensüberwachung von miteinander durch Kleben verbundenen Bauteilelementen. Hierbei findet die Überwachung einer auftretenden Schädigung durch Plastizieren oder Reißen in der Kontaktebene der Klebeverbindung statt. Vor dem Aufbringen des Klebemittels wird entweder mindestens die Kontaktseite eines Elementes vor der Verklebung mit Mikrokapseln versehen, oder das Klebemittel selbst ist mit Mikrokapseln durchsetzt. Durch ein in der Nähe der Klebestelle angeordneter Sensor kann so auf vorteilhafte Weise die Haltbarkeit der Klebeverbindung überwacht werden.

## Patentansprüche

1. Verfahren zur kontinuierlichen Überwachung des Auftretens von Schädigungen in Form von Rissen oder Plastizierungen an einem unter ruhender, dynamischer und/oder wechselnder Belastung stehenden ein- oder mehrteiligen Bauteil, bei dem Oberflächenelemente vorzugsweise schädigungsgefährdeter Bereiche mit einen detektierbaren Wirkstoff enthaltende Mikrokapseln versehen werden, die im Fall des Auftretens einer Schädigung im Bauteil ebenfalls eine Beschädigung erfahren und der **dadurch** freigesetzte Wirkstoff durch mindestens einen am Bauteil in der Nähe der Mikrokapseln angeordneten Sensor erfasst, identifiziert und einer Schadensentstehung im Bauteil zugeordnet wird, wobei die Mikrokapseln einem auftragbaren Beschichtungewerkstoff zugesetzt werden und die entsprechenden Oberflächenelemente ein- oder mehrlagig beschichtet werden, wobei mindestens eine Lage die Mikrokapseln enthält,
**dadurch gekennzeichnet**,
das als Wirkstoff ein von der Umgebungsluft unterscheidbarer gasförmiger oder gasabsondernder flüssiger Duftstoff verwendet wird.

2. Verfahren nach Anspruch 1,
**dadurch gekennzeichnet,**
**dass** Bauteilelemente mit unterschiedlichen Beschichtungen versehen werden, wobei die jeweilige Beschichtung mit Mikrokapseln durchsetzt ist, die jeweils einen anderen Wirkstoff enthalten, und zur Schadensdetektion ein den jeweiligen Werkstoff identifizierender Sensor an den einzelnen Bauteiletementen angeordnet wird.

3. Verfahren nach einem der Ansprüche 1 - 2,
**dadurch gekennzeichnet,**
**dass** die Überwachung an schwer zugänglichen Stellen des Bauteils vorgenommen wird.

4. Verfahren nach einem der Ansprüche 1 - 3,
**dadurch gekennzeichnet,**
**dass** bei miteinander durch Kleben verbundenen Bauteilelementen die Schadensüberwachung in der Kontaktebene der Klebeverbindung stattfindet und vor dem Aufbringen des Klebemittels entweder mindestens die Kontaktseite eines Elementes vor der Verklebung mit Mikrokapseln versehen wird, oder das Klebemittel selbst mit Mikrokapseln durchsetzt ist.

5. Verfahren nach einem der Ansprüche 1 - 4,
**dadurch gekennzeichnet.**
**dass** die Schadensüberwachung an einem als Hohlkörper ausgebildeten Bauteil vorgenommen wird.

6. Verfahren nach Anspruch 5,
**dadurch gekennzeichnet,**
**dass** die Schadensüberwachung innerhalb des Hohlkörpers stattfindet, wobei mindestens ein Oberflächenbereich der Innenseite des Hohlkörpers mit Mikrokapsein versehen ist.

7. Verfahren nach einem der Anspruche 1 - 6,
**dadurch gekennzeichnet,**
**dass** die Schadensüberwachung automatisiert erfolgt.

8. Verfahren nach einem der Ansprüche 1 - 7,
**dadurch gekennzeichnet,**
**dass** das Bauteil ein Maschinenbauteil ist,

9. Verfahren nach Anspruch 8,
**dadurch gekennzeichnet**,
das das Maschinenbautell ein langgestreckter Hohlkörper ist.

10. Verfahren nach einem der Ansprüche 1 - 9,
**dadurch gekennzeichnet.**
**dass** das Bauteil ein tragendes Element eines Fahrzeuges ist.

11. Vorfahren nach einem der Ansprüche 1 - 9,
**dadurch gekennzeichnet,**
**dass** das Bauteil ein tragendes Element eines Flugzeuges ist.

12. Verfahren nach einem der Ansprüche 1 - 7,
**dadurch gekennzeichnet,**
**dass** das Bauteil ein Brülckenbauelement ist.

13. Verfahren nach einem der Ansprüche 1 - 7,
**dadurch gekennzeichnet,**
**dass** das Bauteil ein tragendes Element einer Windenergleanlage ist.

## Claims

1. A method of continuously monitoring the occurrence of damage in the form of cracks or plasticization on a component in one or more parts which is under static, dynamic and/or alternating load and in which surface elements of regions particularly at risk of damage are provided with microcapsules which contain an active agent capable of being detected and which in the event of the occurrence of damage in the component likewise undergo damage, and the active agent released in this way is detected by at least one sensor arranged on the component in the vicinity of the microcapsules, is identified and is correlated with the occurrence of damage in the component, wherein the microcapsules are added to a coating material capable of being applied and the corresponding surface elements are coated in one or more layers, wherein at least one layer contains the microcapsules, **characterized in that** a scent in the form of a gas or a liquid exuding a gas and capable of being distinguished from the surrounding air is used as the active agent.

2. A method according to Claim 1, **characterized in that** component elements are provided with different coatings, wherein the respective coating is permeated with micro-capsules which in each case contain a different active agent, and a sensor identifying the respective active agent is arranged on the individual component elements in order to detect damage.

3. A method according to one of Claims 1 and 2, **characterized in that** the monitoring is carried out at points on the component which are difficult to reach.

4. A method according to any one of Claims 1 to 3, **characterized in that** when component elements are joined to one another by adhesion the monitoring of the damage is carried out in the contact plane of the adhesive join, and before the application of the adhesive either at least the contact side of an element is provided with microcapsules before the adhesion or the adhesive itself is permeated with microcapsules.

5. A method according to any one of Claims 1 to 4, **characterized in that** the monitoring of the damage is carried out on a component designed in the form of a hollow body.

6. A method according to Claim 5, **characterized in that** the monitoring of the damage is carried out inside the hollow body, wherein at least one surface region of the inside of the hollow body is provided with microcapsules.

7. A method according to any one of Claims 1 to 6, **characterized in that** the monitoring of the damage is carried out in an automated manner.

8. A method according to any one of Claims 1 to 7, **characterized in that** the component is a machine component.

9. A method according to Claim 8, **characterized in that** the machine component is an elongate hollow body.

10. A method according to any one of Claims 1 to 9, **characterized in that** the component is a supporting element of a vehicle.

11. A method according to any one of Claims 1 to 9, **characterized in that** the component is a supporting element of an aircraft.

12. A method according to any one of Claims 1 to 7, **characterized in that** the component is a bridge component.

13. A method according to any one of Claims 1 to 7, **characterized in that** the component is a supporting element of a wind turbine.

## Revendications

1. Dispositif destiné à contrôler de façon continue l'apparition de dommages sous la forme de fissures ou de ramollissements au niveau d'un élément de construction à une ou plusieurs parties soumis à une charge constante, dynamique et/ou variable, dans lequel des éléments de surface, de préférence des zones susceptibles d'être endommagées, sont munis de micro-capsules renfermant un principe actif détectable, lesquelles micro-capsules en cas d'apparition d'un dommage au niveau de l'élément de construction sont elles aussi endommagées et dans lequel le principe actif alors libéré détecte, identifie et détermine l'apparition de dommage au niveau de l'élément de construction par au moins un capteur agencé au niveau de l'élément de construction à proximité des micro-capsules, les micro-capsules étant recouvertes d'une substance d'enduction et les éléments de surface correspondants étant recouverts d'une ou de plusieurs couches, au moins une couche contenant les micro-capsules, **caractérisé en ce que** l'on utilise comme principe actif une matière odorante sous forme de gaz ou liquide à séparation gazeuse que l'on peut distinguer de l'air ambiant.

2. Dispositif selon la revendication 1,
**caractérisé en ce que** les éléments de construction sont munis de différents revêtements, chaque revêtement étant chargé de micro-capsules qui contiennent chacune un principe actif différent et **en ce que**, pour la détection des dommages, il est agencé sur les différents éléments de construction un capteur capable d'identifier les différents principes actifs.

3. Dispositif selon l'une des revendications 1 à 2,
**caractérisé en ce que** le contrôle est effectué à des endroits difficilement accessibles de l'élément de construction.

4. Dispositif selon l'une des revendications 1 à 3,
**caractérisé en ce que** dans le cas d'éléments de construction reliés entre eux par de la colle, le contrôle des dommages s'effectue dans la zone de contact de la liaison adhésive, et **en ce que**, avant d'appliquer le moyen adhésif, au moins une des faces de contact d'un élément est munie de micro-capsules ou bien le moyen adhésif lui-même est recouvert de micro-capsules.

5. Dispositif selon l'une des revendications 1 à 4,
**caractérisé en ce que** le contrôle de dommages est réalisé sur un élément de construction réalisé sous la forme d'un corps creux.

6. Dispositif selon la revendication 5,
**caractérisé en ce que** le contrôle de dommages s'effectue à l'intérieur du corps creux, au moins une zone de surface de l'intérieur du corps creux étant pourvue de micro-capsules.

7. Dispositif selon l'une des revendications 1 à 6,
**caractérisé en ce que** le contrôle de dommages s'effectue de façon automatique.

8. Dispositif selon l'une des revendications 1 à 7,
**caractérisé en ce que** l'élément de construction est un élément de construction de machine.

9. Dispositif selon la revendication 8,
**caractérisé en ce que** l'élément de construction de machine est un corps creux allongé.

10. Dispositif selon l'une des revendications 1 à 9,
**caractérisé en ce que** l'élément de construction est un élément porteur d'un véhicule.

11. Dispositif selon l'une des revendications 1 à 9,
**caractérisé en ce que** l'élément de construction est un élément porteur d'un avion.

12. Dispositif selon l'une des revendications 1 à 7,
**caractérisé en ce que** l'élément de construction est un élément de construction de pont.

13. Dispositif selon l'une des revendications 1 à 7,
**caractérisé en ce que** l'élément de construction est un élément porteur d'une installation d'énergie éolienne.
